# EUROPEAN PATENT SPECIFICATION

(11) **EP 2 832 798 B1**
(45) Date of publication and mention of the grant of the patent: **24.07.2019**
(21) Application number: 13770203.1
(22) Date of filing: 11.03.2013
(51) Int. Cl.: C08K 3/04, C08K 3/34, C08K 7/00, C08L 23/00, C08L 101/00

(54) **RESIN COMPOSITE MATERIAL**
HARZVERBUNDMATERIAL
MATIÈRE COMPOSITE DE RÉSINE

(30) Priority: 27.03.2012 JP 2012070580; 30.10.2012 JP 2012239098
(43) Date of publication of application: 04.02.2015
(73) Proprietor: Sekisui Chemical Co., Ltd., Osaka-shi, Osaka 530-8565 (JP)
(72) Inventor: MUKOHATA, Daisuke, Mishima-gun Osaka 618-0021 (JP); TAKAHASHI, Katsunori, Mishima-gun Osaka 618-0021 (JP); INUI, Nobuhiko, Mishima-gun Osaka 618-0021 (JP)
(74) Representative: Ter Meer Steinmeister & Partner
(86) International application number: PCT/JP2013/056635
(87) International publication number: WO 2013/146213

(56) References cited:
- EP-A1- 2 784 117
- EP-A1- 2 835 393
- EP-A1- 2 910 524
- WO-A1-2010/016976
- WO-A1-2011/118535
- WO-A1-2011/118535
- WO-A1-2011/158907
- WO-A1-2011/158907
- WO-A1-2012/029946
- WO-A1-2012/029946
- JP-A- 2006 522 466
- JP-A- 2006 522 466
- JP-A- 2007 031 611
- JP-A- 2007 031 611
- JP-A- 2010 235 887
- JP-A- 2010 235 887
- JP-A- 2011 016 936
- JP-A- 2011 016 936

## Description

### Technical Field

The present invention relates to a resin composite material comprising a thermoplastic resin and a filler.

### Background Art

Conventionally, there has been known a resin composite material prepared by blending a filler with a thermoplastic resin. A thermoplastic resin can be blended with various fillers to thereby impart various physical properties to a resin composite material, for example, to increase the coefficient of linear expansion of the resin composite material.

As a resin composite material containing a filler, for example, a resin composite material using graphite as a filler is known.

For example, Patent Literature 1 discloses a resin composite material prepared by blending graphite powder with a thermoplastic resin. Patent Literature 1 proposes obtaining a resin composite material having a high modulus of elasticity by blending graphite powder with a resin.

### Citation List

### Patent Literature

Patent Literature 1: Japanese Patent Laid-Open No. 6-32939

JP 2007 031611 A relates to a thermoplastic resin composition comprising a thermoplastic resin and graphite.

### Summary of Invention

### Technical Problem

However, in a resin composite material as disclosed in Patent Literature 1, the modulus of elasticity of the resin composite material may not sufficiently be increased only by blending a small amount of graphite powder with a thermoplastic resin.

A main object of the present invention is to provide a resin composite material having a high modulus of elasticity.

### Solution to Problem

The resin composite material according to the present invention comprises a thermoplastic resin, exfoliated graphite, and an inorganic filler different from the exfoliated graphite, wherein the inorganic filler is talc, and the inorganic filler is contained in an amount of 50 parts by mass or more based on 100 parts by mass of the thermoplastic resin, wherein the number of stacked graphene sheets constituting the exfoliated graphite is 150 or less.

### Advantageous Effects of Invention

The present invention can provide a resin composite material having a high modulus of elasticity.

### Brief Description of Drawing

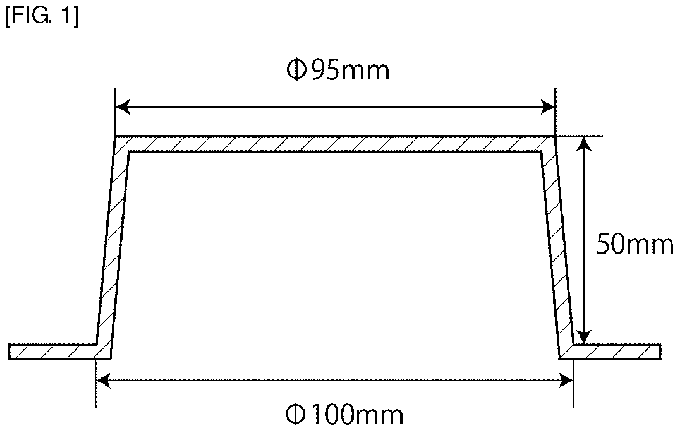

Figure 1 is a schematic front sectional view of a cup manufactured in Examples and Comparative Examples.

### Description of Embodiments

Hereinafter, the details of the present invention will be described. The resin composite material according to the present invention comprises a thermoplastic resin, exfoliated graphite, and an inorganic filler different from the exfoliated graphite, a defined in claim 1.

The thermoplastic resin is not particularly limited, but a known thermoplastic resin can be used as the thermoplastic resin. Specific examples of the thermoplastic resin include polyolefin, polystyrene, polyacrylate, polymethacrylate, polyacrylonitrile, polyester, polyamide, polyurethane, polyethersulfone, polyetherketone, polyimide, polydimethylsiloxane, polycarbonate, and a copolymer of at least two thereof. The thermoplastic resin may be contained in a resin composite material singly or in combination of two or more.

The thermoplastic resin is preferably polyolefin. Polyolefin is inexpensive and easily molded under heating. Therefore, the use of polyolefin as a thermoplastic resin can reduce the manufacturing cost of a resin composite material and allows a resin composite material to be easily molded.

Examples of polyolefin include polyethylene; polypropylene; polyethylene resins such as an ethylene homopolymer, an ethylene-α-olefin copolymer, an ethylene-(meth)acrylic acid copolymer, an ethylene-(meth)acrylate copolymer, and an ethylene-vinylacetate copolymer; polypropylene resins such as a propylene homopolymer, a propylene-α-olefin copolymer, a propylene-ethylene random copolymer, and a propylene-ethylene block copolymer; a butene homopolymer; and homopolymers or copolymers of conjugated dienes such as butadiene and isoprene. Polypropylene resins are particularly preferred as the thermoplastic resin.

In the present invention, exfoliated graphite is a stack of graphene sheets each constituted by one layer of graphene. Exfoliated graphite is obtained by exfoliation of graphite. That is, exfoliated graphite is a stack of graphene sheets which is thinner than original graphite. The number of stacked graphene sheets is 150 or less from the viewpoint of effectively increasing the mechanical strength such as tensile modulus of elasticity of a resin composite material.

The average particle size of exfoliated graphite is preferably about 0.1 to 50 µm. Note that the average particle size of exfoliated graphite is a value measured with a particle size distribution measuring device.

Exfoliated graphite has a shape having a high aspect ratio. Therefore, when exfoliated graphite is uniformly dispersed in the resin composite material according to the present invention, its reinforcing effect against an external force exerted in a direction intersecting a stacked plane of exfoliated graphite can be effectively enhanced. However, if the aspect ratio of exfoliated graphite is too low, its reinforcing effect against an external force exerted in a direction intersecting the stacked plane may be not sufficient. If the aspect ratio of exfoliated graphite is too high, the effect may be saturated, and a further improved reinforcing effect may not be expected. From the viewpoint as described above, the aspect ratio of exfoliated graphite is preferably 20 or more, and more preferably 50 or more. The aspect ratio of exfoliated graphite is preferably 5000 or less. Note that in the present invention, the aspect ratio refers to the ratio of the maximum size in the direction of the stacked plane of exfoliated graphite to the thickness of exfoliated graphite.

A commercial product of exfoliated graphite is available, and exfoliated graphite can also be manufactured by a conventionally known process. For example, exfoliated graphite is obtained by processes, e.g., a chemical treatment process in which ions such as nitrate ions are inserted between the layers of graphite and then heat-treated, a physical treatment process such as applying an ultrasonic wave to graphite, and an electrochemical process of performing electrolysis using graphite as a working electrode.

Exfoliated graphite may be surface-modified. Examples of the surface modification include grafting of a resin to the surface of exfoliated graphite and introducing a hydrophilic functional group or a hydrophobic functional group into the surface of exfoliated graphite. The compatibility of exfoliated graphite with a thermoplastic resin can be improved by the surface modification of exfoliated graphite. When the compatibility of exfoliated graphite with the thermoplastic resin is increased, the mechanical strength such as the modulus of elasticity of a resin composite material can be increased.

In the resin composite material, the exfoliated graphite is contained in an amount of preferably 0.1 part by mass or more, and more preferably 1 part by mass or more based on 100 parts by mass of the thermoplastic resin from the viewpoint of effectively increasing the mechanical strength such as the modulus of elasticity of the resin composite material. In the resin composite material, the exfoliated graphite is contained in an amount of preferably 50 parts by mass or less, and more preferably 40 parts by mass or less based on 100 parts by mass of the thermoplastic resin from the viewpoint of suppressing the resin composite material from becoming brittle and being easily ruptured.

The inorganic filler different from the exfoliated graphite is talc. In this case, the mechanical strength can be further increased, and the coefficient of linear expansion can be further reduced.

The average particle size of the inorganic filler is preferably about 0.1 to 100 µm, and more preferably about 1 to 50 µm from the viewpoint of effectively increasing the mechanical strength of a resin composite material. Note that the average particle size of the inorganic filler is a value measured with a particle size distribution measuring device.

In the resin composite material, the inorganic filler is contained in an amount of 50 parts by mass or more, and preferably 55 parts by mass or more based on 100 parts by mass of the thermoplastic resin from the viewpoint of effectively increasing the mechanical strength such as the modulus of elasticity of the resin composite material. In the resin composite material, the inorganic filler is contained in an amount of preferably 200 parts by mass or less, and more preferably 150 parts by mass or less based on 100 parts by mass of the thermoplastic resin from the viewpoint of suppressing the resin composite material from becoming brittle and being easily ruptured.

In the resin composite material, the exfoliated graphite and the inorganic filler are contained in a mass ratio (exfoliated graphite:inorganic filler) preferably ranging from about 1:2 to about 1:30, and more preferably ranging from about 1:3 to about 1:20. When the exfoliated graphite and the inorganic filler are contained in such a mass ratio, the modulus of elasticity of the resin composite material can be effectively increased.

The resin composite material may further contain an additive. Examples of the additive include antioxidants such as a phenol-based, phosphorus-based, amine-based, and sulfur-based antioxidants; ultraviolet absorbers such as a benzotriazole-based and hydroxyphenyl triazine-based ultraviolet absorbers; metal harm inhibitors; halogenated flame retardants such as hexabromobiphenyl ether and decabromodiphenyl ether; flame retardants such as ammonium polyphosphate and trimethyl phosphate; various fillers; antistatic agents; stabilizers; and pigments.

As described above, an attempt has been made to obtain a resin composite material having a high modulus of elasticity by mixing graphite powder or the like with a thermoplastic resin. However, it has been difficult to sufficiently increase the modulus of elasticity of a resin composite material only by blending a small amount of graphite powder with a thermoplastic resin.

The resin composite material according to the present invention further contains an inorganic filler different from exfoliated graphite in a thermoplastic resin in addition to the exfoliated graphite. The resin composite material according to the present invention has a high modulus of elasticity by further containing an inorganic filler different from exfoliated graphite in addition to the exfoliated graphite. Moreover, the resin composite material according to the present invention has a low coefficient of linear expansion, and is excellent also in fabricability.

The tensile modulus of elasticity of the resin composite material according to the present invention is preferably 5.0 GPa or more. When the tensile modulus of elasticity of the resin composite material is 5.0 GPa or more, the resin composite material can be suitably used for the applications such as vehicle parts and structural materials which require high tensile modulus of elasticity. The coefficient of linear expansion of the resin composite material according to the present invention is preferably 7.5 × 10⁻⁵/K or less. When the coefficient of linear expansion of a resin composite material is 7.5 × 10⁻⁵/K or less, the resin composite material can be suitably used for the applications such as vehicle parts and structural materials in which a low coefficient of linear expansion is required. Note that the modulus of elasticity and coefficient of linear expansion of a resin composite material each are values measured by the methods described in Examples.

The resin composite material according to the present invention can be manufactured, for example, as follows.

First, the thermoplastic resin, the exfoliated graphite, and the inorganic filler are provided. Next, the thermoplastic resin, the exfoliated graphite, and the inorganic filler are mixed. The mixing method is not particularly limited as long as it is a method by which a thermoplastic resin, exfoliated graphite, and an inorganic filler can be mixed. The mixing is preferably carried out at a temperature where a thermoplastic resin melts.

Examples of the mixing method include a method of kneading with heating using a kneading apparatus such as a twin-screw kneading machine such as a plastomill, a single-screw extruder, a twin-screw extruder, a Banbury mixer, and a roll. The method of melt-kneading using a plastomill is preferred among them.

Moreover, a resin composite material can also be molded into a desired shape such as a sheet form to obtain a resin molded product such as a resin composition sheet by subjecting the resin composite material to press-processing, injection molding, extrusion molding, or the like.

Hereinafter, the present invention will be further described in detail based on specific Examples.

### (Example 1)

One hundred parts by mass of polypropylene (trade name "J-721GR", tensile modulus of elasticity: 1.2 GPa, coefficient of linear expansion: 11 × 10⁻⁵/K, manufactured by Prime Polymer Co., Ltd.), 10 parts by mass of exfoliated graphite (graphene, trade name "xGnP-M5", number of stacked graphene sheets: 90, aspect ratio: 168, manufactured by XG Sciences, Inc.), and 100 parts by mass of talc (trade name "L-1", particle size: 5 µm, manufactured by Nippon Talc Co., Ltd.) were melt-kneaded with a Labo Plastomill (trade name "R-100", manufactured by Toyo Seiki Seisaku-sho, Ltd.) at 180°C to obtain a resin composition. The resulting resin composition was molded into a sheet form by press-processing to obtain a resin composition sheet having a thickness of 0.5 mm.

### (Example 2)

A resin composite material sheet having a thickness of 0.5 mm was obtained in the same manner as in Example 1 except that 0.1 part by mass of exfoliated graphite was used.

### (Example 3)

A resin composite material sheet having a thickness of 0.5 mm was obtained in the same manner as in Example 1 except that 40 parts by mass of exfoliated graphite was used.

### (Example 4)

A resin composite material sheet having a thickness of 0.5 mm was obtained in the same manner as in Example 1 except that polyethylene (trade name "1300J", flexural modulus: 1.3 GPa, coefficient of linear expansion: 11 × 10⁻⁵/K, manufactured by Prime Polymer Co., Ltd.) was used instead of polypropylene.

### (Example 5)

A resin composite material sheet having a thickness of 0.5 mm was obtained in the same manner as in Example 1 except that bentonite (trade name "S-BEN N400", manufactured by HOJUN Co., Ltd.) was used instead of talc.

### (Example 6)

A resin composite material sheet having a thickness of 0.5 mm was obtained in the same manner as in Example 1 except that calcium carbonate (trade name "BF300", particle size: 8.0 µm, manufactured by Shiraishi Calcium Kaisha, Ltd.) was used instead of talc.

### (Example 7)

A resin composite material sheet having a thickness of 0.5 mm was obtained in the same manner as in Example 1 except that 50 parts by mass of talc was used.

### (Example 8)

A resin composite material sheet having a thickness of 0.5 mm was obtained in the same manner as in Example 1 except that exfoliated graphite having a different number of stacked graphene sheets from that of the exfoliated graphite used in Example 1 (graphene, trade name "xGnP-H5", number of stacked graphene sheets: 120, aspect ratio: 126, manufactured by XG Sciences, Inc.) was used.

### (Example 9)

A resin composite material sheet having a thickness of 0.5 mm was obtained in the same manner as in Example 1 except that polycarbonate (trade name: "H-4000", tensile modulus of elasticity: 2.4 GPa, coefficient of linear expansion: 6.5 × 10⁻⁵/K, manufactured by Mitsubishi Engineering-Plastics, Corporation) was used instead of polypropylene.

### (Example 10)

A resin composite material sheet having a thickness of 0.5 mm was obtained in the same manner as in Example 1 except that polyester (trade name: "5010R3-2", tensile modulus of elasticity: 2.4 GPa, coefficient of linear expansion: 10 × 10⁻⁵/K, manufactured by Mitsubishi Engineering-Plastics, Corporation) was used instead of polypropylene.

### (Example 11)

A resin composite material sheet having a thickness of 0.5 mm was obtained in the same manner as in Example 1 except that polyamide (trade name "1300S", flexural modulus: 2.7 GPa, coefficient of linear expansion: 8 × 10⁻⁵/K, manufactured by Asahi Kasei Corporation) was used instead of polypropylene.

### (Example 12)

A resin composite material sheet having a thickness of 0.5 mm was obtained in the same manner as in Example 1 except that polystyrene (trade name: "CR-3500", flexural modulus: 3.3 GPa, manufactured by DIC Corporation) was used instead of polypropylene.

### (Example 13)

A resin composite material sheet having a thickness of 0.5 mm was obtained in the same manner as in Example 1 except that polymethylmethacrylate (trade name: "VH000", tensile modulus of elasticity: 3.3 GPa, coefficient of linear expansion: 6 × 10⁻⁵/K, manufactured by Mitsubishi Rayon Co., Ltd.) was used instead of polypropylene.

### (Comparative Example 1)

A resin composite material sheet having a thickness of 0.5 mm was obtained in the same manner as in Example 1 except that talc was not used.

### (Comparative Example 2)

A resin composite material sheet having a thickness of 0.5 mm was obtained in the same manner as in Example 1 except that exfoliated graphite was not used.

### (Comparative Example 3)

A resin composite material sheet having a thickness of 0.5 mm was obtained in the same manner as in Example 1 except that natural graphite (trade name: "SNO", number of stacked graphene sheets: 1500, manufactured by SEC Carbon, Ltd.) was used instead of exfoliated graphite.

### (Comparative Example 4)

A resin composite material sheet having a thickness of 0.5 mm was obtained in the same manner as in Comparative Example 3 except that talc was not used.

### (Comparative Example 5)

A resin composite material sheet having a thickness of 0.5 mm was obtained in the same manner as in Example 2 except that talc was not used.

### (Comparative Example 6)

A resin composite material sheet having a thickness of 0.5 mm was obtained in the same manner as in Example 3 except that talc was not used.

### (Comparative Example 7)

A resin composite material sheet having a thickness of 0.5 mm was obtained in the same manner as in Comparative Example 6 except that 50 parts by mass of exfoliated graphite was used.

### (Comparative Example 8)

A resin composite material sheet having a thickness of 0.5 mm was obtained in the same manner as in Example 4 except that talc was not used.

### (Comparative Example 9)

A resin composite material sheet having a thickness of 0.5 mm was obtained in the same manner as in Example 4 except that exfoliated graphite was not used.

### (Comparative Example 10)

A resin composite material sheet having a thickness of 0.5 mm was obtained in the same manner as in Example 5 except that exfoliated graphite was not used.

### (Comparative Example 11)

A resin composite material sheet having a thickness of 0.5 mm was obtained in the same manner as in Example 6 except that exfoliated graphite was not used.

### (Comparative Example 12)

A resin composite material sheet having a thickness of 0.5 mm was obtained in the same manner as in Example 7 except that exfoliated graphite was not used.

### (Comparative Example 13)

A resin composite material sheet having a thickness of 0.5 mm was obtained in the same manner as in Example 1 except that exfoliated graphite was not used, and 25 parts by mass of talc was used.

### (Comparative Example 14)

A resin composite material sheet having a thickness of 0.5 mm was obtained in the same manner as in Example 8 except that talc was not used.

### (Comparative Example 15)

A resin composite material sheet having a thickness of 0.5 mm was obtained in the same manner as in Example 9 except that talc was not used.

### (Comparative Example 16)

A resin composite material sheet having a thickness of 0.5 mm was obtained in the same manner as in Example 9 except that exfoliated graphite was not used.

### (Comparative Example 17)

A resin composite material sheet having a thickness of 0.5 mm was obtained in the same manner as in Example 10 except that talc was not used.

### (Comparative Example 18)

A resin composite material sheet having a thickness of 0.5 mm was obtained in the same manner as in Example 10 except that exfoliated graphite was not used.

### (Comparative Example 19)

A resin composite material sheet having a thickness of 0.5 mm was obtained in the same manner as in Example 11 except that talc was not used.

### (Comparative Example 20)

A resin composite material sheet having a thickness of 0.5 mm was obtained in the same manner as in Example 11 except that exfoliated graphite was not used.

### (Comparative Example 21)

A resin composite material sheet having a thickness of 0.5 mm was obtained in the same manner as in Example 12 except that talc was not used.

### (Comparative Example 22)

A resin composite material sheet having a thickness of 0.5 mm was obtained in the same manner as in Example 12 except that exfoliated graphite was not used.

### (Comparative Example 23)

A resin composite material sheet having a thickness of 0.5 mm was obtained in the same manner as in Example 13 except that talc was not used.

### (Comparative Example 24)

A resin composite material sheet having a thickness of 0.5 mm was obtained in the same manner as in Example 13 except that exfoliated graphite was not used.

The resin composite material sheets of Examples 1 to 13 and Comparative Examples 1 to 24 obtained as described above were evaluated for tensile modulus of elasticity, a coefficient of linear expansion, and fabricability by the following procedures.

### (1) Evaluation of Tensile Modulus of Elasticity

Flat rectangular test pieces each having a length of 75 mm and a width of 6.0 mm were cut from the resin composite material sheets obtained in Examples 1 to 13 and Comparative Examples 1 to 24. Each test piece was measured for the tensile modulus of elasticity at 23°C according to JIS K7161. The tensile modulus of elasticity (GPa), and the relative rate (%) of increase in the tensile modulus of elasticity based on the tensile modulus of elasticity of a thermoplastic resin (100%) are shown in Tables 1 to 3.

### (2) Evaluation of Coefficient of Linear Expansion

The average coefficient of linear expansion at 30 to 100°C of the resin composite material sheets obtained in Examples 1 to 13 and Comparative Examples 1 to 24 was measured according to JIS K7197. The coefficient of linear expansion (%) and the relative rate (%) of improvement in the coefficient of linear expansion based on the coefficient of linear expansion of a thermoplastic resin (100%) are shown in Tables 1 to 3.

### (3) Evaluation of Fabricability

The resin composite material sheets obtained in Examples 1 to 13 and Comparative Examples 1 to 24 each were molded into a cup having a shape as shown in Figure 1 using a pair of upper and lower press dies. The resulting cup was evaluated for its appearance by visual observation. At this time, the fabricability was rated as good (G) when the cup had neither wrinkles nor rupture, and the fabricability was rated as poor (P) when the cup had wrinkles and rupture.

**[Table 1]**

| | Ex. 1 | Ex. 2 | Ex. 3 | Ex. 4 | Ex. 5 | Ex. 6 | Ex. 7 |
|---|---|---|---|---|---|---|---|
| Thermoplastic resin | Polypropylene | Polypropylene | Polypropylene | Polyethylene | Polypropylene | Polypropylene | Polypropylene |
| Carbon material (parts by mass) | Exfoliated graphite 10 | Exfoliated graphite 0.1 | Exfoliated graphite 40 | Exfoliated graphite 10 | Exfoliated graphite 10 | Exfoliated graphite 10 | Exfoliated graphite 10 |
| Inorganic filler (parts by mass) | Talc 100 | Talc 100 | Talc 100 | Talc 100 | Bentonite 100 | Calcium carbonate 100 | Talc 50 |
| Tensile modulus of elasticity (GPa) | 7.1 | 5.0 | 8.1 | 7.0 | 6.5 | 5.9 | 4.2 |
| Rate of increase in tensile modulus of elasticity(%) | 492 | 317 | 575 | 483 | 442 | 392 | 250 |
| Coefficient of linear expansion (× 10⁻⁵/°C) | 41 | 72 | 37 | 51 | 56 | 64 | 65 |
| Rate of improvement in coefficient of linear expansion (%) | 63 | 35 | 66 | 54 | 49 | 42 | 41 |
| Evaluation of fabricability | G | G | G | G | G | G | G |

| | Ex. 8 | Ex-9 | Ex. 10 | Ex. 11 | Ex. 12 | Ex. 13 | |
|---|---|---|---|---|---|---|---|
| Thermoplastic resin | Polypropylene | Polycarbonate | Polyester | Polyamide | Polystyrene | Polymethylmethacrylate | |
| Carbon material (parts by mass) | Exfoliated graphite 10 | Exfoliated graphite 10 | Exfoliated graphite 10 | Exfoliated graphite 10 | Exfoliated graphite 10 | Exfoliated graphite 10 | |
| Inorganic filler (parts by mass) | Talc 100 | Talc 100 | Talc 100 | Talc 100 | Talc 100 | Talc 100 | |
| Tensile modulus of elasticity (GPa) | 6.8 | 7.9 | 7.8 | 8.3 | 8 | 8.1 | |
| Rate of increase in tensile modulus of elasticity(%) | 467 | 229 | 225 | 207 | 142 | 145 | |
| Coefficient of linear expansion (× 10⁻⁵/°C) | 40 | 38 | 43 | 40 | 40 | 32 | |
| Rate of improvement in coefficient of linear expansion (%) | 64 | 42 | 57 | 50 | 40 | 47 | |
| Evaluation of fabricability | G | G | G | G | G | G | |

**[Table 2]**

| | Comp. Ex. 1 | Comp. Ex. 2 | Comp. Ex. 3 | Comp. Ex. 4 | Comp. Ex. 5 | Comp. Ex. 6 | Comp. Ex. 7 |
|---|---|---|---|---|---|---|---|
| Thermoplastic resin | Polypropylene | Polypropylene | Polypropylene | Polypropylene | Polypropylene | Polypropylene | Polypropylene |
| Carbon material (parts by mass) | Exfoliated graphite 10 | - | Natural graphite 10 | Natural graphite 10 | Exfoliated graphite 0.1 | Exfoliated graphite 40 | Exfoliated graphite 50 |
| Inorganic filler (parts by mass) | - | Talc 100 | Talc 100 | - | - | - | - |
| Tensile modulus of elasticity (GPa) | 1.8 | 4.5 | 4.6 | 1.4 | 1.3 | 3.6 | 4.1 |
| Rate of increase in tensile modulus of elasticity(%) | 50 | 275 | 283 | 17 | 8 | 200 | 242 |
| Coefficient of linear expansion (× 10⁻⁵/°C) | 86 | 79 | 78 | 102 | 106 | 81 | 79 |
| Rate of improvement in coefficient of linear expansion (%) | 22 | 28 | 29 | 7 | 4 | 26 | 28 |
| Evaluation of fabricability | G | G | G | G | G | G | P |

| | Comp. Ex. 8 | Comp. Ex. 9 | Comp. Ex. 10 | Comp. Ex. 11 | Comp. Ex. 12 | Comp. Ex. 13 | Comp. Ex. 14 |
|---|---|---|---|---|---|---|---|
| Thermoplastic resin | Polyethylene | Polyethylene | Polypropylene | Polypropylene | Polypropylene | Polypropylene | Polypropylene |
| Carbon material (parts by mass) | Exfoliated graphite 10 | - | - | - | - | - | Exfoliated graphite 10 |
| Inorganic filler (parts by mass) | - | Talc 100 | Bentonite 100 | Calcium carbonate 100 | Talc 50 | Talc 25 | |
| Tensile modulus of elasticity (GPa) | 1.7 | 4.2 | 4.1 | 3.6 | 3.2 | 2.3 | 1.7 |
| Rate of increase in tensile modulus of elasticity(%) | 42 | 250 | 242 | 200 | 167 | 92 | 42 |
| Coefficient of linear expansion (× 10⁻⁵/°C) | 88 | 85 | 88 | 95 | 91 | 100 | 84 |
| Rate of improvement in coefficient of linear expansion (%) | 20 | 23 | 20 | 14 | 17 | 9 | 24 |
| Evaluation of fabricability | G | G | G | G | G | G | G |

**[Table 3]**

| | Comp. Ex. 15 | Comp. Ex. 16 | Comp. Ex. 17 | Comp. Ex. 18 | Comp. Ex. 19 | Comp. Ex. 20 | Comp. Ex. 21 |
|---|---|---|---|---|---|---|---|
| Thermoplastic resin | Polycarbonate | Polycarbonate | Polyester | Polyester | Polyamide | Polyamide | Polystyrene |
| Carbon material (parts by mass) | Exfoliated graphite 10 | - | Exfoliated graphite 10 | - | Exfoliated graphite 10 | - | Exfoliated graphite 10 |
| Inorganic filler (parts by mass) | - | Talc 100 | - | Talc 100 | - | Talc 100 | - |
| Tensile modulus of elasticity (GPa) | 3.4 | 5.7 | 3.3 | 5.9 | 4.2 | 6.1 | 3.8 |
| Rate of increase in tensile modulus of elasticity(%) | 42 | 138 | 38 | 146 | 56 | 126 | 15 |
| Coefficient of linear expansion (× 10⁻⁵/°C) | 57 | 52 | 85 | 70 | 68 | 58 | 61 |
| Rate of improvement in coefficient of linear expansion (%) | 12 | 20 | 15 | 30 | 15 | 28 | 9 |
| Evaluation of fabricability | G | G | G | G | G | G | G |

| | Comp. Ex. 22 | Comp. Ex. 23 | Comp. Ex. 24 | | | | |
|---|---|---|---|---|---|---|---|
| Thermoplastic resin | Polystyrene | Polymethylmethacrylate | Polymethylmethacrylate | | | | |
| Carbon material (parts by mass) | - | Exfoliated graphite 10 | - | | | | |
| Inorganic filler (parts by mass) | Talc 100 | - | Talc 100 | | | | |
| Tensile modulus of elasticity (GPa) | 7.0 | 4.3 | 6.2 | | | | |
| Rate of increase in tensile modulus of elasticity(%) | 112 | 30 | 88 | | | | |
| Coefficient of linear expansion (× 10⁻⁵/°C) | 49 | 52 | 48 | | | | |
| Rate of improvement in coefficient of linear expansion (%) | 27 | 22 | 20 | | | | |
| Evaluation of fabricability | G | G | G | | | | |

## Claims

1. A resin composite material comprising a thermoplastic resin, exfoliated graphite, and an inorganic filler different from the exfoliated graphite, wherein the inorganic filler is talc, and the inorganic filler is contained in an amount of 50 parts by mass or more based on 100 parts by mass of the thermoplastic resin,
wherein the number of stacked graphene sheets constituting the exfoliated graphite is 150 or less.

2. The resin composite material according to claim 1, wherein the aspect ratio of exfoliated graphite is 20 or more.

3. The resin composite material according to claim 1 or 2, wherein the exfoliated graphite is contained in an amount of 0.1 part by mass to 40 parts by mass based on 100 parts by mass of the thermoplastic resin.

4. The resin composite material according to any one of claims 1 to 3, wherein the thermoplastic resin is polyolefin.

## Patentansprüche

1. Harzverbundmaterial, umfassend ein thermoplastisches Harz, Blähgraphit und einen von dem Blähgraphit verschiedenen, anorganischen Füllstoff, wobei der anorganische Füllstoff Talk ist, und der anorganische Füllstoff in einer Menge von 50 Masseteilen oder mehr, basierend auf 100 Masseteilen des thermoplastischen Harzes, enthalten ist, wobei die Anzahl gestapelter Graphenschichten, welche den Blähgraphit aufbauen, 150 oder weniger beträgt.

2. Harzverbundmaterial nach Anspruch 1, wobei das Aspektverhältnis des Blähgraphits 20 oder mehr beträgt.

3. Harzverbundmaterial nach Anspruch 1oder 2, wobei der Blähgraphit in einer Menge von 0,1 Masseteilen bis 40 Masseteilen, basierend auf 100 Masseteilen des thermoplastischen Harzes, enthalten ist.

4. Harzverbundmaterial nach irgendeinem der Ansprüche 1 bis 3, wobei das thermoplastische Harz Polyolefin ist.

## Revendications

1. Un matériau composite à base de résine comprenant une résine thermoplastique, du graphite exfolié et une charge inorganique différente du graphite exfolié, dans lequel la charge inorganique est du talc, et la charge inorganique est contenue en une quantité de 50 parties en masse ou plus sur la base de 100 parties en masse de la résine thermoplastique,
dans lequel le nombre de feuilles de graphène empilées constituant le graphite exfolié est de 150 ou moins.

2. Le matériau composite à base de résine selon la revendication 1, dans lequel le rapport de longueur et largeur du graphite exfolié est de 20 ou plus.

3. Le matériau composite à base de résine selon la revendication 1 ou 2, dans lequel le graphite exfolié est contenu en une quantité de 0,1 partie en masse à 40 parties en masse pour 100 parties en masse de la résine thermoplastique.

4. Le matériau composite à base de résine selon l'une quelconque des revendications 1 à 3, dans lequel la résine thermoplastique est une polyoléfine.
